(19) Europäisches Patentamt

European Patent Office

Office européen des brevets

(11) **EP 1 053 607 B1**

(12) **EUROPEAN PATENT SPECIFICATION**

(45) Date of publication and mention
of the grant of the patent:
**02.04.2003 Bulletin 2003/14**

(51) Int Cl.⁷: **H04B 7/26**

(86) International application number:
**PCT/EP98/05495**

(21) Application number: **98946445.8**

(22) Date of filing: **24.08.1998**

(87) International publication number:
**WO 99/012280 (11.03.1999 Gazette 1999/10)**

(54) **SYCHRONISATION APPARATUS AND METHOD FOR TDMA CELLULAR COMMUNICATIONS**

SYNCHRONISIERUNGSVORRICHTUNG UND VERFAHREN IN EINEM ZELLULAREN
TDMA-KOMMUNIKATIONSSYSTEM

APPAREIL ET PROCEDE DE SYNCHRONISATION POUR COMMUNICATIONS CELLULAIRES
AMRT

(84) Designated Contracting States:
**DE ES FI FR IT NL SE**

(30) Priority: **29.08.1997 GB 9718185**

(43) Date of publication of application:
**22.11.2000 Bulletin 2000/47**

(73) Proprietor: **MOTOROLA LTD**
**Basingstoke, Hampshire RG22 4PD (GB)**

(72) Inventor: **MOHEBBI, Behzad**
**Twickenham TW1 2JN (GB)**

(74) Representative: **Litchfield, Laura Marie**
**Motorola European Intellectual Property**
**Operations,**
**Midpoint - Alencon Link**
**Basingstoke, Hampshire RG21 7PL (GB)**

(56) References cited:
**EP-A- 0 589 753**          **WO-A-95/02306**
**WO-A-97/12451**

**Description**

Field of the Invention

The present invention relates to a synchronisation apparatus and a method therefor, of the type used in a time division cellular telephone system, for example, a TDMA (Time Division Multiple Access) system, such as a GSM (Global System for Mobile Communications) system.

Background of the Invention

In a TDMA based cellular telephone system, signals are transmitted, in bursts, between a given user terminal and a base station. These bursts are known as in the art as TDMA bursts; a desired TDMA burst corresponds to a particular signal transmission between the given user terminal and the base station. Additionally, other TDMA bursts between the base station and other user terminals propagate partially or substantially at the same time as the desired TDMA burst.
WO 97 12451A discloses an example of a TDMA system. Specifically it discloses a method of allocating time slots to mobile stations in response to the distance between the base station and the cell. Time slots within a contiguous group of timeslots are assigned to mobile stations in order of increasing distance. At least one time slot in the back of the contiguous group is not assigned so as to allow bursts from the mobile stations to slide into the next time slot.
If signal orthogonality is not achieved in a TDMA system, for example, by means of frequency planning, the other TDMA bursts can overlap, fully or partially, with the desired TDMA burst, the result of which being problematic:
Firstly, upon receipt of the desired TDMA burst, the midamble of the desired TDMA burst can be subject to high interference levels, caused by the full or partial overlap with the other TDMA bursts.
Secondly, in a system employing adaptive antennas, during transmission of the desired burst, the profile of the interference caused by the other TDMA bursts may vary due to partial overlap of the TDMA bursts, thereby requiring different antenna weight settings at the base station.
It is thus an object of the present invention to obviate or mitigate the above described problems associated with TDMA bursts.

Summary of the Invention

According to a first aspect of the present invention, there is provided a communications system comprising a first remote terminal capable of transmitting a first data burst to a first base station within a first cell, characterised by further comprising a monitoring element arranged to monitor within the first cell electromagnetic interference from a second terminal and determine an optimal time for transmitting the first data burst as that resulting in the least electromagnetic interference during a training sequence of the first data burst comprising a predetermined series of symbols.
According to a second aspect of the present invention, there is provided a base station for a first cell capable of receiving a first data burst from a first remote terminal, characterised by comprising a monitoring element arranged to monitor within the first cell electromagnetic interference from a second terminal and determine an optimal time for transmitting the first data burst as that resulting in the least electromagnetic interference during a training sequence of the first data burst comprising a predetermined series of symbols.
According to a third aspect of the present invention, there is provided a remote terminal capable of transmitting a first data burst to a first base station in a first cell; characterised by further comprising a monitoring element arranged to monitor within the first cell electromagnetic interference from a second terminal and determine an optimal time for transmitting the first data burst as that resulting in the least electromagnetic interference during a training sequence of the first data burst comprising a predetermined series of symbols.
According to a fourth aspect of the present invention, there is provided a method of transmitting a first data burst from a first remote terminal to a first base station in a first cell, the method characterised by comprising the steps of: monitoring within the first cell electromagnetic interference from a second terminal, and determining an optimal time for transmitting the first data burst as that resulting in the least electromagnetic interference during a training sequence of the first data burst comprising a predetermined series of symbols.
It is thus possible to provide a synchronisation apparatus and method therefor which facilitates the reduction of overlap of data bursts, thereby reducing interference.
Other, preferred, features and advantages are set forth in, and will become apparent from, the following description and accompanying dependent claims.

Brief Description of the Drawinos

At least one embodiment of the invention will now be described, by way of example, with reference to the accompanying drawings, in which:

FIG. 1 is a schematic illustration of a pair of adjacent cells;

FIG. 2 is a schematic diagram of the structure of a data frame;

FIG. 3 is a schematic diagram of a data burst in a time slot;

FIG. 4 is a schematic side elevation of FIG. 1;

FIG. 5 is a schematic diagram of overlapping data bursts;

FIG. 6 is a power v. time graph for data bursts relating to an embodiment of the present invention;

FIG. 7 is a flow diagram for the transmission of data bursts of FIG. 5, and

FIG. 8 is a schematic diagram of data bursts constituting an embodiment of the present invention.

Description of a Preferred Embodiment

The following example relates to a GSM system. However, it is not intended to limit the present invention to such a system and other time division systems can be used to implement the invention.

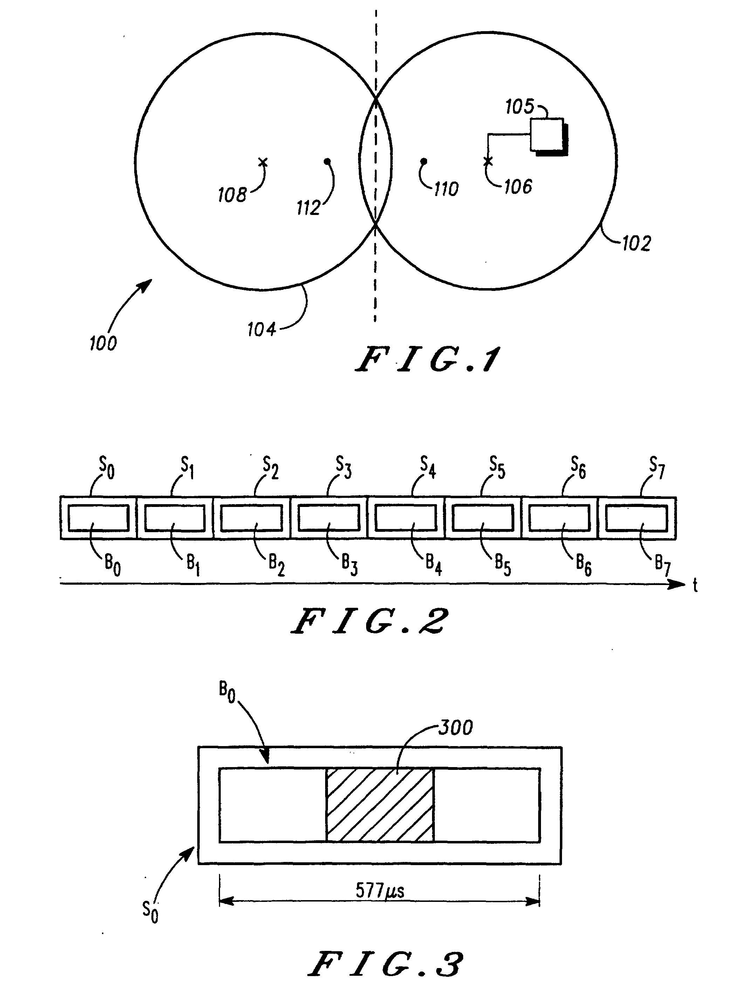

A TDMA system 100 (FIG. 1) comprises a first cell 102 and a second cell 104, respectively having a first base station 106 and a second base station 108. A monitoring element 105 is coupled to the first base station 106. A first mobile terminal or handset 110 is located within the first cell 102 and a second mobile terminal or handset 112 is located within the second cell 104.

The first and second base stations 106, 108 can be of any type known in the art suitable for the appropriate time division system being used, for example, a set of M-Cell base stations manufactured by Motorola, Limited.

The first and second handsets 110, 112 can, similarly, be any known cellular telephone handset, for example a STARTAC[A] GSM cellular telephone manufactured by Motorola GmbH.

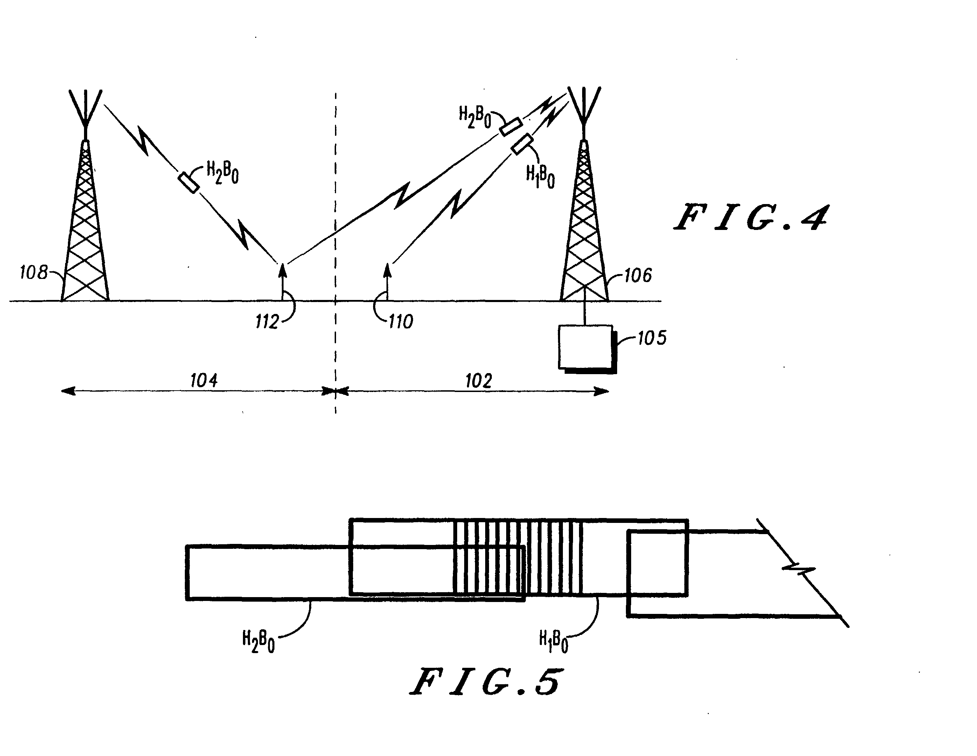

Referring to FIG. 2, the first handset 110 is capable of transmitting a first repeating series of sequential data bursts $H_1B_0$, $H_1B_1$, $H_1B_2$, ..., $H_1B_7$ (hereinafter referred to as -the first series") within a set of respective sequential time slots $S_0$, $S_1$, $S_2$, ..., $S_7$. A first data burst $H_1B_0$ lasts 577μs and comprises a midamble 300 (FIG. 3) of 26 bits, the midamble 300 being located within the centre of the first data burst $H_1B_0$. Data bursts $H_1B_1$, $H_1B_2$, ..., $H_1B_7$ also have midambles 300. As is known in the art, the midamble 300 of the first data burst $H_1B_0$ comprises a predetermined series of known bits.

The second handset 112 is also capable of transmitting a second repeating series of sequential data bursts $H_2B_0$, $H_2B_1$, $H_2B_2$, ..., $H_2B_7$ (hereinafter referred to as -the second series") within a set of respective time slots $S_0$, $S_1$, $S_2$, ..., $S_7$. The set of respective time slots $S_0$, $S_1$, $S_2$, ..., $S_7$ of the first series can be in synchronism with the respective time slots $S_0$, $S_1$, $S_2$, ..., $S_7$ of the second series, although this is not an essential requirement. It should be appreciated that due to propagation delays, the arrival of data bursts at, for example, the first base station 106 will differ in time - even for a system employing time slots which are in synchronism. The data bursts have the same structure as described above in relation to the first data burst $H_1B_0$.

Operation of the embodiment of the invention is described below.

Referring to Fig. 4, the first handset 110 transmits the first series $H_1B_0$, ..., $H_1B_7$ to the first base station 106. Similarly, the second handset 112 transmits the second series $H_2B_0$, ..., $H_2B_7$ to the second base station 108.

Due to the nature of propagation of Radio Frequency (RF) signals., the first base station 106 is able to receive the second series $H_2B_0$, ..., $H_2B_7$ transmitted by the second handset 112.

Consequently, the receipt of the first series $H_1B_0$, ..., $H_1B_7$ at the first base station 106 is impaired by the additional receipt of the second series $H_2B_0$, ..., $H_2B_7$ at the first base station 106, i.e. interference occurs.

This example will be further described in the context of a first data burst $H_1B_0$ transmitted by the first handset 110 and a second data burst $H_2B_0$ transmitted by the second handset 112. However, this example is being given for clarity and simplicity of description and it is not intended that the present invention be limited to the interference between the first and second data bursts $H_1B_0$, $H_2B_0$. Indeed, interference can occur between any one of the data bursts comprising the first series $H_1B_0$, ..., $H_1B_7$ and any one of the data bursts comprising the second series $H_2B_0$, ..., $H_2B_7$.

As can be seen from FIG. 5, the first data burst $H_1B_0$ from the first handset 110 temporally overlaps with the first data burst $H_2B_0$ from the second handset 112. Temporal overlap of the first data burst $H_1B_0$ from the first handset 110 can also occur with any one of the data bursts $H_2B_0$, ..., $H_2B_7$ from the second handset 112, or any other handset transmitting data bursts from a neighbouring cell (not shown).

In order to avoid interference between the first series $H_1B_0$, ..., $H_1B_7$ and the second series $H_2B_0$, ..., $H_2B_7$, it is sufficient to ensure that the midamble 300 of the first data burst $H_1B_0$ from the first handset 110 does not partially interfere/overlap with the midamble of the first data burst $H_2B_0$ from the second handset 112. By avoiding partial overlap of midambles, it is possible to extract the remains of any overlapping data bursts using signal processing techniques known in the art, for example, spatial filtering.

In order to avoid partial overlap of midambles, it is necessary to determine an optimal time to transmit the first data burst $H_1B_0$, such that transmission of the first data burst $H_1B_0$ from the first handset 110 burst will not cause the midamble of the data burst to partially overlap with the midamble 300 of the first data burst $H_2B_0$ from the second handset 112 and thereby cause interference.

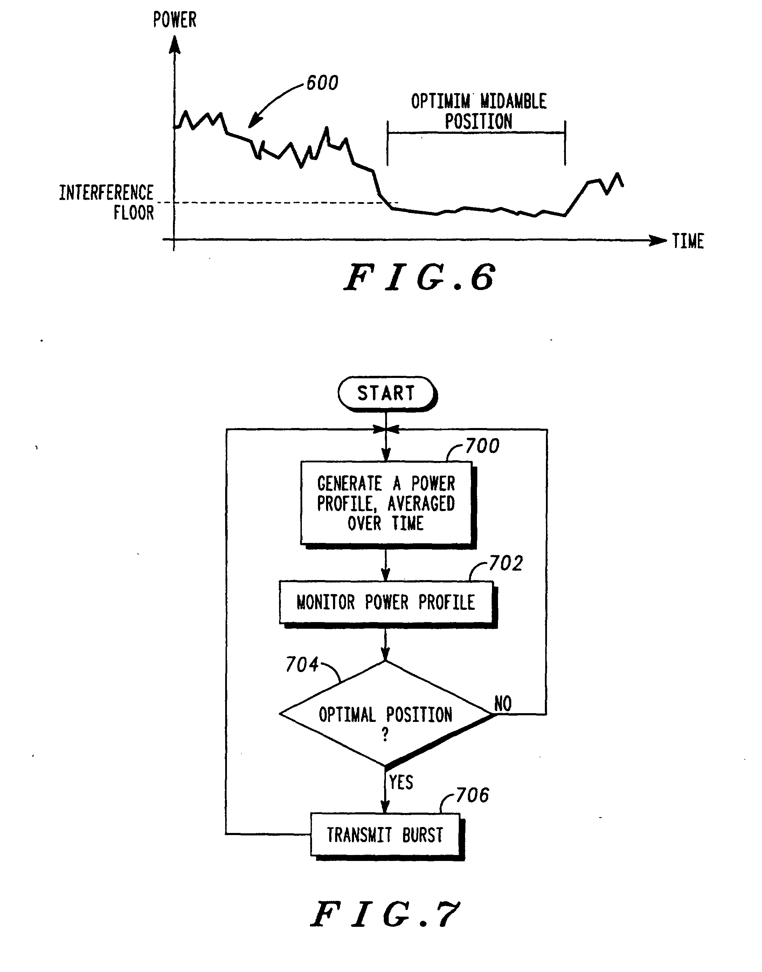

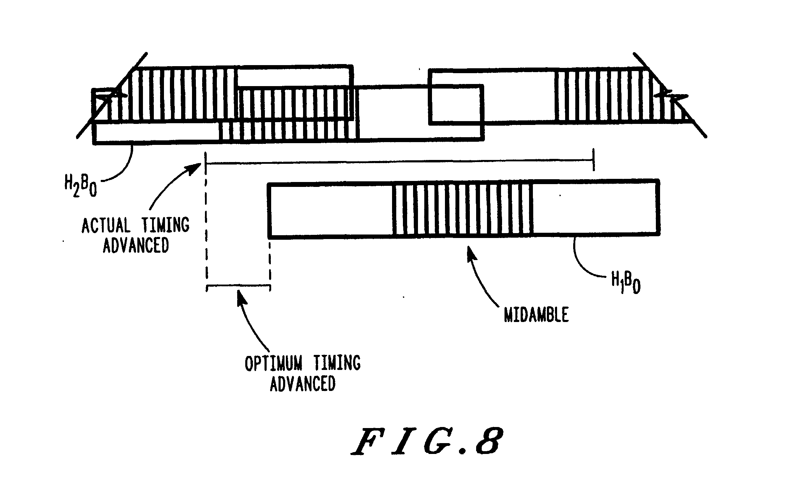

Referring to FIGs. 6 and 7, in order to determine the optimal time to transmit the first data burst $H_1B_0$, a power profile 600 of interference is generated (step 700) by the monitoring element 105. The power profile can be generated, for example, before a call is set up or during non-transmission periods, such as Discontinuous Transmission (DTX) of voice or data, using amplitude measurement techniques known in the art. Alternatively, the power profile 600 can be generated by cross-correlating the interfering signals transmitted by other terminals with the midamble of the data burst to be transmitted, for example, the first data burst $H_1B_0$. The result of the above cross-correlation or amplitude measurement is a burst duration profile of the interfering signals. The burst duration profile can be time averaged over several bursts to minimise fluctuations in the burst duration profile caused by multipath fading.

The power profile is monitored (step 702) in order to detect (step 704) the optimal time to transmit the first data burst $H_1B_0$.

Although not essential to the present invention, the burst duration profile will also provide sufficient guidance for the minimum required transmit power setting to provide enough processing gain for the successful convergence of antenna weights.

The minimum required transmit power setting, $Setting_{minreq}$, is calculated on the following basis:

$$Setting_{minreq} = InterferLev_{abs} + PathLoss_{est} + Margin_{req}$$

where: $InterferLev_{abs}$ is the measures absolute interference level during an optimum transmission period, $PathLoss_{est}$ is the estimated path loss based on the distance of the mobile from the base station, and $Margin_{req}$ is the required margin for successful weight convergence.

Once the optimal time with least interference and the minimum required transmit power setting for transmission of the first data burst $H_1B_0$ have been determined (step 704), the timing advance associated with the transmission of the first data burst $H_1B_0$ can be varied in order to ensure that the midamble 300 of the first data burst $H_1B_0$ is transmitted at the optimal position as shown in FIG. 8, so that the midamble 300 of the first data burst $H_1B_0$ from the first handset 110 does not temporally partially overlap the midambles of other data bursts, thereby obviating or mitigating interference. The first data burst $H_1B_0$ is then transmitted (step 706) and the above process is repeated for a next data burst to be transmitted.

**Claims**

1. A communications system (100) comprising a first remote terminal (110) capable of transmitting a first data burst to a first base station (106) within a first cell, **characterised by** further comprising a monitoring element (105) arranged to monitor within the first cell (102) electromagnetic interference from a second terminal (112) and to determine an optimal time for transmitting the first data burst as that resulting in the least electromagnetic interference during a training sequence (300) of the first data burst the training sequence comprising a predetermined series of symbols.

2. A system (100) as claimed in Claim 1, further comprising a second cell, having a second base station (108) the second terminal (112) being located within the second cell (104) and capable of transmitting a second data burst to the second base station, the electromagnetic interference from the second terminal (112) including electromagnetic energy corresponding to the second data burst.

3. A system (100) as claimed in Claim 1, wherein the training sequence (300) is a midamble and the optimal time for transmitting the first data burst is the optimal time for transmitting the midamble of the first data burst.

4. A system (100) as claimed in Claim 1, wherein the monitoring element (105) is arranged to cross-correlate the midamble of the first data burst with the electromagnetic interference from the second terminal (112).

5. A system (100) as claimed in Claim 1, wherein the first cell (102) comprises a further remote terminal capable of transmitting a further data burst to the first base station, the electromagnetic interference including electromagnetic energy corresponding to the further data burst.

6. A base station for a first cell (102) capable of receiving a first data burst from a first remote terminal (110), **characterised by** comprising a monitoring element (105) arranged to monitor within the first cell (102) electromagnetic interference from a second terminal (112) and to determine an optimal time for transmitting the first data burst as that resulting in the least electromagnetic interference during a training sequence (300) of the first data burst, the training sequence comprising a predetermined series of symbols..

7. A base station as claimed in Claim 6, a second cell (104) having a second base station (108) is provided, the second terminal (112) capable of transmitting a second data burst to the second base station, the electromagnetic interference from the second terminal (112) including electromagnetic energy corresponding to the second data burst.

8. A base station as claimed in Claim 6, wherein the training sequence (300) is a midamble and the optimal time for transmitting the first data burst is the optimal time for transmitting the midamble of the first data burst.

9. A base station as claimed in Claim 6, wherein the monitoring element (105) is arranged to cross-correlate the midamble of the first data burst with the electromagnetic interference from the second terminal (112).

10. A base station as claimed in Claim 6, wherein the first cell comprises a further remote terminal capable of transmitting a further data burst to the first base station, the electromagnetic interference including electromagnetic energy corresponding to the further data burst.

11. A remote terminal capable of transmitting a first data burst to a first base station in a first cell, **characterised by** the first base station (106) having a monitoring element (105) arranged to monitor within the first cell electromagnetic interference from a second terminal (112) and to determine an optimal time for transmitting the first data burst as that resulting in the least electromagnetic interference during a training sequence (300) of the first data burst, the training sequence comprising a predetermined series of symbols..

12. A remote terminal as claimed in Claim 11, wherein a second cell having a second base station is provided, the second base station being located within the second cell and capable of transmitting a second data burst to the second base station, the electromagnetic interference from the second cell including electromagnetic energy corresponding to the second data burst.

13. A remote terminal as claimed in Claim 11, wherein the training sequence (300) is a midamble and the optimal time for transmitting the first data burst is the optimal time for transmitting the midamble of the first data burst.

14. A remote terminal as claimed in Claim 11, wherein the monitoring element (105) is arranged to cross-correlate the midamble of the first data burst with the electromagnetic interference from the second terminal (112).

15. A remote terminal as claimed in Claim 11, wherein the first cell comprises a further remote terminal capable of transmitting a further data burst to the first base station, the electromagnetic interference including electromagnetic energy corresponding to the further data burst.

16. A remote terminal as claimed in Claim 11, further comprising a transmitter arranged to transmit the first data burst in response to the determination by the first base station (106) of the optimal time for transmitting the first data burst.

17. A method of transmitting a first data burst from a first remote terminal (110) to a first base station (106) in a first cell, **characterised by** the method comprising the steps of:

monitoring within the first cell (102) electromagnetic interference from a second terminal (112), and

determining an optimal time for transmitting the first data burst as that resulting in the least electromagnetic interference during a training sequence (300) of the first data burst, the training sequence, comprising a predetermined series of symbols..

**18.** A method as claimed in Claim 17, further comprising providing a second cell (104) having a second base station (108) and transmitting a second data burst from a second terminal (112) to the second base station (108) in the second cell, the electromagnetic interference from the second cell (104) including electromagnetic energy corresponding to the second data burst.

**19.** A method as claimed in Claim 17, wherein the training sequence (300) is a midamble, and comprising the step of transmitting the first data burst at the optimal time for transmitting the midamble of the first data burst.

**20.** A method as claimed in Claim 17, further comprising cross-correlating the midamble of the first data burst with the electromagnetic interference from the second terminal.

**21.** A method as claimed in Claim 17, further comprising transmitting a further data burst from a further remote terminal in the first cell to the first base station, the electromagnetic interference including electromagnetic energy corresponding to the further data burst.

**Revendications**

**1.** Système de télécommunications (100) comprenant un premier terminal éloigné (110) pouvant émettre une première salve de données à destination d'une première station de base (106) se trouvant à l'intérieur d'une première cellule, **caractérisé en ce qu'**il comprend en outre un élément de contrôle (105) conçu pour contrôler, à l'intérieur de la première cellule (102), les interférences électromagnétiques venant d'un deuxième terminal (112) et pour déterminer le moment optimal pour l'émission de la première salve de données comme celui conduisant à moins d'interférences électromagnétiques pendant une séquence d'apprentissage (300) de la première salve de données, la séquence d'apprentissage comprenant une série prédéterminée de symboles.

**2.** Système (100) selon la revendication 1, comprenant en outre une deuxième cellule, qui possède une deuxième station de base (108), le deuxième terminal (112) étant placé à l'intérieur de la deuxième cellule (104) et étant en mesure d'émettre une deuxième salve de données à destination de la deuxième station de base, les interférences électromagnétiques venant du deuxième terminal (112) comportant l'énergie électromagnétique qui correspond à la deuxième salve de données.

**3.** Système (100) selon la revendication 1, où la séquence d'apprentissage (300) est une position de synchronisation médiane, ou médiambule, et le moment optimal pour l'émission de la première salve de données est le moment optimal pour l'émission du médiambule de la première salve de données.

**4.** Système (100) selon la revendication 1, où l'élément de contrôle (105) est conçu pour assurer la corrélation croisée du médiambule de la première salve de données avec les interférences électromagnétiques venant du deuxième terminal (112).

**5.** Système (100) selon la revendication 1, où la première cellule (102) comprend un autre terminal éloigné qui est en mesure d'émettre une autre salve de données à destination de la première station de base, les interférences électromagnétiques comportant l'énergie électromagnétique qui correspond à l'autre salve de données.

**6.** Station de base associée à une première cellule (102) qui est en mesure de recevoir une première salve de données en provenance d'un premier terminal éloigné (110), **caractérisée en ce qu'**elle comprend un élément de contrôle (105) conçu pour contrôler, à l'intérieur de la première cellule (102), les interférences électromagnétiques venant d'un deuxième terminal (112) et pour déterminer le moment optimal pour l'émission de la première salve de données comme celui conduisant à moins d'interférences électromagnétiques pendant une séquence d'apprentissage (300) de la première salve de données, la séquence d'apprentissage comprenant une série prédéterminée de symboles.

**7.** Station de base selon la revendication 6, où une deuxième cellule (104) possédant une deuxième station de base (108) est prévue, le deuxième terminal (112) étant en mesure d'émettre une deuxième salve de données à destination de la deuxième station de base, les interférences électromagnétiques venant du deuxième terminal (112) comportant de l'énergie électrique qui correspond à la deuxième salve de données.

8. Système (100) selon la revendication 6, où la séquence d'apprentissage (300) est une position de synchronisation médiane, ou médiambule, et le moment optimal pour l'émission de la première salve de données est le moment optimal pour l'émission du médiambule de la première salve de données.

9. Système (100) selon la revendication 6, où l'élément de contrôle (105) est conçu pour assurer la corrélation croisée du médiambule de la première salve de données avec les interférences électromagnétiques venant du deuxième terminal (112).

10. Système (100) selon la revendication 6, où la première cellule (102) comprend un autre terminal éloigné qui est en mesure d'émettre une autre salve de données à destination de la première station de base, les interférences électromagnétiques comportant l'énergie électromagnétique qui correspond à l'autre salve de données.

11. Terminal éloigné pouvant émettre une première salve de données à destination d'une première station de base se trouvant dans une première cellule, **caractérisé par le fait que** la première station de base (106) possède un élément de contrôle (105) conçu pour contrôler, à l'intérieur de la première cellule (102), les interférences électromagnétiques venant d'un deuxième terminal (112) et pour déterminer le moment optimal pour l'émission de la première salve de données comme celui conduisant à moins d'interférences électromagnétiques pendant une séquence d'apprentissage (300) de la première salve de données, la séquence d'apprentissage comprenant une série prédéterminée de symboles.

12. Station de base selon la revendication 11, où une deuxième cellule possédant une deuxième station de base est prévue, la deuxième station de base étant placée à l'intérieur de la deuxième cellule et étant en mesure d'émettre une deuxième salve de données à destination de la deuxième station de base, les interférences électromagnétiques venant du deuxième terminal (112) comportant de l'énergie électrique qui correspond à la deuxième salve de données.

13. Système selon la revendication 11, où la séquence d'apprentissage (300) est une position de synchronisation médiane, ou médiambule, et le moment optimal pour l'émission de la première salve de données est le moment optimal pour l'émission du médiambule de la première salve de données.

14. Système selon la revendication 11, où l'élément de contrôle (105) est conçu pour assurer la corrélation croisée du médiambule de la première salve de données avec les interférences électromagnétiques venant du deuxième terminal (112).

15. Système selon la revendication 11, où la première cellule comprend un autre terminal éloigné qui est en mesure d'émettre une autre salve de données à destination de la première station de base, les interférences électromagnétiques comportant l'énergie électromagnétique qui correspond à l'autre salve de données.

16. Terminal éloigné selon la revendication 11, comprenant en outre un émetteur conçu pour émettre la première salve de données en réponse à la détermination, par la première station de base (106), du moment optimal pour émettre la première salve de données.

17. Procédé d'émission d'une première salve de données en provenance d'un premier terminal éloigné (110) et à destination d'une première station de base (106) se trouvant dans une première cellule, le procédé étant **caractérisé en ce qu'**il comprend les opérations suivantes :

contrôler, à l'intérieur de la première cellule (102), les interférences électromagnétiques venant d'un deuxième terminal (112), et
déterminer le moment optimal pour émettre la première salve de données comme celui qui conduit à moins d'interférences électromagnétiques pendant une séquence d'apprentissage (300) de la première salve de données, la séquence d'apprentissage comprenant une série prédéterminée de symboles.

18. Procédé selon la revendication 17, comprenant en outre l'opération qui consiste à prévoir une deuxième cellule (104) possédant une deuxième station de base (108) et à émettre à une deuxième salve de données, d'un deuxième terminal (112) à la deuxième station de base (108) se trouvant dans la deuxième cellule, les interférences électromagnétiques qui viennent de la deuxième cellule (104) comportant l'énergie électromagnétique qui correspond à la deuxième salve de données.

19. Procédé selon la revendication 17, où la séquence d'apprentissage (300) est un médiambule, et comprend l'opération consistant à émettre la première salve de données au moment optimal pour émettre le médiambule de la première salve de données.

20. Procédé selon la revendication 17, comprenant en outre la corrélation en croix du médiambule de la première salve de données avec les interférences électromagnétiques venant du deuxième terminal.

21. Procédé selon la revendication 17, comprenant en outre l'opération consistant à transmettre une autre salve de données en provenance d'un autre terminal éloigné de la première cellule, à destination de la première station de base, les interférences électromagnétiques comportant l'énergie électromagnétique qui correspond à l'autre salve de données.


**Patentansprüche**

1. Kommunikationssystem (100) mit einem ersten entfernten Endgerät (110), das geeignet ist, einen ersten Datenburst an eine erste Basisstation (106) innerhalb einer ersten Zelle zu senden, und das **dadurch gekennzeichnet ist, dass** es weiterhin ein Überwachungselement (105) umfasst, das so angeordnet bzw. beschaffen ist, dass es innerhalb der ersten Zelle (102) die elektromagnetische Interferenz von einem zweiten Endgerät (112) überwacht und eine optimale Zeit zum Senden des ersten Datenbursts bestimmt, die zu der geringsten elektromagnetischen Interferenz während einer Trainingssequenz (300) des ersten Datenbursts führt, wobei die Trainingssequenz eine vorbestimmte Reihe von Symbolen umfasst.

2. System (100) gemäß Anspruch 1, das weiterhin eine zweite Zelle umfasst, die eine zweite Basisstation (108) hat, wobei das zweite Endgerät (112) innerhalb der zweiten Zelle (104) angeordnet ist und in der Lage ist, einen zweiten Datenburst an die zweite Basisstation zu senden, wobei die elektromagnetische Interferenz von dem zweiten Endgerät (112) elektromagnetische Energie entsprechend dem zweiten Datenburst umfasst.

3. System (100) gemäß Anspruch 1, bei dem die Trainingssequenz (300) eine Midambel ist und die optimale Zeit zum Senden des ersten Datenbursts die optimale Zeit zum Senden der Midambel des ersten Datenbursts ist.

4. System (100) gemäß Anspruch 1, bei dem das Überwachungselement (105) so angeordnet bzw. beschaffen ist, dass es die Midambel des ersten Datenbursts mit der elektromagnetischen Interferenz von dem zweiten Endgerät (112) kreuzkorreliert.

5. System (100) gemäß Anspruch 1, bei dem die erste Zelle (102) ein weiteres entferntes Endgerät umfasst, das geeignet ist, einen weiteren Datenburst an die erste Basisstation zu senden, wobei die elektromagnetische Interferenz elektromagnetische Energie entsprechend dem weiteren Datenburst umfasst.

6. Basisstation für eine erste Zelle (102), die geeignet ist, einen ersten Datenburst von einem ersten entfernten Endgerät (110) zu empfangen, und die **dadurch gekennzeichnet ist, dass** sie ein Überwachungselement (105) umfasst, das so angeordnet bzw. beschaffen ist, dass es innerhalb der ersten Zelle (102) die elektromagnetische Interferenz von einem zweiten Endgerät (112) überwacht und eine optimale Zeit zum Senden des ersten Datenbursts bestimmt, die zu der geringsten elektromagnetischen Interferenz während einer Trainingssequenz (300) des ersten Datenbursts führt, wobei die Trainingssequenz eine vorbestimmte Reihe von Symbolen umfasst.

7. Basisstation gemäß Anspruch 6, bei der eine zweite Zelle (104) mit einer zweiten Basisstation (108) zur Verfügung gestellt wird, wobei das zweite Endgerät (112) geeignet ist, einen zweiten Datenburst an die zweite Basisstation zu senden und die elektromagnetische Interferenz von dem zweiten Endgerät (112) elektromagnetische Energie entsprechend dem zweiten Datenburst umfasst.

8. Basisstation gemäß Anspruch 6, bei der die Trainingssequenz (300) eine Midambel ist und die optimale Zeit zum Senden des ersten Datenbursts die optimale Zeit zum Senden der Midambel des ersten Datenbursts ist.

9. Basisstation gemäß Anspruch 6, bei der das Überwachungselement (105) so angeordnet bzw. beschaffen ist, dass es die Midambel des ersten Datenbursts mit der elektromagnetischen Interferenz von dem zweiten Endgerät (112) kreuzkorreliert.

10. Basisstation gemäß Anspruch 6, bei der die erste Zelle ein weiteres entferntes Endgerät umfasst, das geeignet ist, einen weiteren Datenburst an die erste Basisstation zu senden, wobei die elektromagnetische Interferenz elektromagnetische Energie entsprechend dem weiteren Datenburst umfasst.

11. Entferntes Endgerät, das geeignet ist, einen ersten Datenburst an eine erste Basisstation in einer ersten Zelle zu senden, die durch eine erste Basisstation (106) gekennzeichnet ist, die ein Überwachungselement (105) hat, das so angeordnet bzw. beschaffen ist, dass es innerhalb der ersten Zelle elektromagnetische Interferenz von einem zweiten Endgerät (112) überwacht und eine optimale Zeit zum Senden des ersten Datenbursts bestimmt, die zu der geringsten elektromagnetischen Interferenz während einer Trainingssequenz (300) des ersten Datenbursts führt, wobei die Trainingssequenz eine vorbestimmte Reihe von Symbolen umfasst.

12. Entferntes Endgerät gemäß Anspruch 11, bei dem eine zweite Zelle mit einer zweiten Basisstation zur Verfügung gestellt wird, wobei die zweite Basisstation innerhalb der zweiten Zelle angeordnet ist und geeignet ist, einen zweiten Datenburst an die zweite Basisstation zu senden, wobei die elektromagnetische Interferenz von der zweiten Zelle elektromagnetische Energie gemäß dem zweiten Datenburst umfasst.

13. Entferntes Endgerät gemäß Anspruch 11, bei dem die Trainingssequenz (300) eine Midambel ist und die optimale Zeit zum Senden des ersten Datenbursts die optimale Zeit zum Senden der Midambel dieses ersten Datenbursts ist.

14. Entferntes Endgerät gemäß Anspruch 11, bei dem das Überwachungselement (105) so angeordnet bzw. beschaffen ist, dass es die Midambel des ersten Datenbursts mit der elektromagnetischen Interferenz von dem zweiten Endgerät (112) kreuzkorreliert.

15. Entferntes Endgerät gemäß Anspruch 11, bei dem die erste Zelle ein weiteres entferntes Endgerät umfasst, das geeignet ist, einen weiteren Datenburst an die erste Basisstation zu senden, wobei die elektromagnetische Interferenz elektromagnetische Energie gemäß dem weiteren Datenburst umfasst.

16. Entferntes Endgerät gemäß Anspruch 11, das weiterhin einen Sender umfasst, der so angeordnet bzw. beschaffen ist, dass er den ersten Datenburst in Reaktion auf die Bestimmung der optimalen Zeit zum Senden des ersten Datenbursts durch die erste Basisstation (106) sendet.

17. Verfahren zum Senden eines ersten Datenbursts von einem ersten entfernten Endgerät (110) an eine erste Basisstation (106) in einer ersten Zelle, das durch das Verfahren gekennzeichnet ist, das die folgenden Schritte umfasst:

Überwachen der elektromagnetischen Interferenz von einem zweiten Endgerät (112) in der ersten Zelle (102), und
Bestimmen einer optimalen Zeit zum Senden des ersten Datenbursts, der Zeit, die zu der geringsten elektromagnetischen Interferenz während einer Trainingssequenz (300) des ersten Datenbursts führt, wobei die Trainingssequenz eine vorbestimmte Reihe von Symbolen umfasst.

18. Verfahren gemäß Anspruch 17, das weiterhin das Bereitstellen einer zweiten Zelle (104) umfasst, die eine zweite Basisstation (108) hat und einen zweiten Datenburst von einem zweiten Endgerät (112) an die zweite Basisstation (108) in der zweiten Zelle sendet, wobei die elektromagnetische Interferenz von der zweiten Zelle (104) elektromagnetische Energie entsprechend dem zweiten Datenburst umfasst.

19. Verfahren gemäß Anspruch 17, bei dem die Trainingssequenz (300) eine Midambel ist und das den Schritt umfasst, den ersten Datenburst zu der optimalen Zeit zum Senden der Midambel des ersten Datenbursts zu senden.

20. Verfahren gemäß Anspruch 17, das weiterhin das Kreuzkorrelieren der Midambel des ersten Datenbursts mit der elektromagnetischen Interferenz von dem zweiten Endgerät umfasst.

21. Verfahren gemäß Anspruch 17, das weiterhin das Senden eines weiteren Datenbursts von einem weiteren entfernten Endgerät in der ersten Zelle an die erste Basisstation umfasst, wobei die elektromagnetische Interferenz elektromagnetische Energie entsprechend dem weiteren Datenburst umfasst.

*FIG.1*

*FIG.2*

*FIG.3*

EP 1 053 607 B1

FIG.4

FIG.5

12

POWER

*600*

OPTIMIM MIDAMBLE POSITION

INTERFERENCE FLOOR

TIME

## *F I G . 6*

START

GENERATE A POWER PROFILE, AVERAGED OVER TIME *700*

MONITOR POWER PROFILE *702*

*704* OPTIMAL POSITION ? NO

YES

TRANSMIT BURST *706*

## *F I G . 7*

EP 1 053 607 B1

$H_2B_0$

ACTUAL TIMING
ADVANCED

OPTIMUM TIMING
ADVANCED

MIDAMBLE

$H_1B_0$

*FIG.8*